# EUROPÄISCHE PATENTSCHRIFT

(11) **EP 0 815 563 B1**
(45) Veröffentlichungstag und Bekanntmachung des Hinweises auf die Patenterteilung: **02.06.1999**
(21) Anmeldenummer: 96905722.3
(22) Anmeldetag: 13.03.1996
(51) Int. Cl.: G21C 19/07

(54) **LAGERGESTELL FÜR KERNREAKTOR-BRENNELEMENTE**
STORAGE RACK FOR NUCLEAR-FUEL ELEMENTS
BATI DE STOCKAGE POUR ELEMENTS COMBUSTIBLES D'UN REACTEUR NUCLEAIRE

(30) Priorität: 17.03.1995 DE 19509214
(43) Veröffentlichungstag der Anmeldung: 07.01.1998
(73) Patentinhaber: SIEMENS AKTIENGESELLSCHAFT, 80333 München (DE)
(72) Erfinder: WASINGER, Karl, D-63165 Mühlheim (DE)
(86) Internationale Anmeldenummer: DE9600448
(87) Internationale Veröffentlichungsnummer: WO9629707

(56) Entgegenhaltungen:
- EP-A- 0 120 232
- EP-A- 0 520 438
- EP-A- 0 537 615
- WO-A-94/20964
- FR-A- 2 440 060
- FR-A- 2 680 909
- PATENT ABSTRACTS OF JAPAN Bd. 017, Nr. 332 (P-1562) 23 Juni 1993 & JP,A,05 040 195 (TOSHIBA CORP;OTHERS: 01) 19 Februar 1993

## Beschreibung

Die Erfindung betrifft ein Lagergestell für Kernreaktor-Brennelemente, wobei auf einer Grundplatte mehrere Strukturschächte mit im wesentlichen rechteckigem Querschnitt befestigt sind.

Zur Zwischenlagerung von abgebrannten Brennelementen aus einem Kernkraftwerk, insbesondere einem Druck- oder Siedewasserreaktor, werden die Brennelemente innerhalb des Kernkraftwerkes, insbesondere innerhalb der Brennelement-Lagerbecken, gelagert. Aus technischen und ökonomischen Gründen ist es wünschenswert, den vorhandenen Lagerraum möglichst effizient zu nutzen. Zur Erhöhung der Lagerkapazitat werden Lagergestelle mit eingebautem Neutronengift, beispielsweise mit borhaltigem Material, verwendet. Das Lagergestell soll bei ausreichender mechanischer Stabilität und neutronenabsorbierenden Eigenschaften einen möglichst geringen eigenen Platzbedarf haben, um eine hohe Beladungsdichte für abgebrannte Brennelemente zu ermöglichen.

In der EP 0 537 615 A1 ist ein Lagergestell für Kernreaktor-Brennelemente angegeben, bei dem auf einer Grundplatte mehrere Schächte mit im wesentlichen rechteckigen Querschnitt befestigt sind, wobei die Schächte senkrecht auf der Grundplatte stehen und schachbrettartig jeweils diagonal einander gegenüberliegend angeordnet sind. Ein Teil der diagonal einander gegenüberliegenden Schächte ist jeweils entlang derer mit Versatz aneinander grenzenden Längskanten durch wenigstens zwei Verbindungselemente, welche einen durch den Versatz gebildeten Spalt überbrücken, miteinander verbunden. Dem Längskantenpaar ist wenigstens ein erstes Verbindungselement mit einer hohen Steifigkeit jeweils in einer ersten Richtung parallel zur Grundplatte und wenigstens ein zweites Verbindungselement mit einer hohen Steifigkeit jeweils in einer zweiten Richtung parallel zur Grundplatte zugeordnet. Durch die hohe Steifigkeit der Verbindungselemente können auf das Lagergestell wirkende innere Querkrafte aufgenommen werden, ohne daß ein zusätzliches Stützgitter im oberen Bereich des Lagergestells erforderlich ist. Somit ist auch eine Beladung der nicht mit Schächten versehenen Zwischenräume des Lagergestells möglich, so daß Zwischenpositionen oder Zwischenplätze für Brennelemente gebildet werden. Zur Neutronenabsorption bestehen die Wände der Schächte des Lagergestells aus austenitischem Borstahl mit einem Borgehalt bis 2 %, und die Verbindungselemente bestehen aus einem weichen austenitischen Stahl, dessen Kohlenstoffgehalt kleiner als 0,1 % beträgt. Hierdurch werden bei Einwirken von extremen äußeren Kräften auf das Lagergestell die Borstahlschächte praktisch nicht verformt, da die äußeren Kräfte gegebenenfalls durch plastische Deformationen der Verbindungselemente aufgenommen werden. Durch Verwendung eines austenitischen Borstahls als tragende Struktur für die Schächte ist eine Herstellung dieser Schächte besonders aufwendig, um die geforderte mechanische Stabilität des borierten Stahls zu gewährleisten.

Weitere Ausgestaltungen eines Lagergestells für abgebrannte Brennelemente, bei denen das jeweilige Lagergestell ein neutronenabsorbierendes Material aufweist, sind beispielsweise in der US-PS 4,088,897, der US-PS 4,630,738 der US-PS 4,695,424 sowie der US-PS 4,119,859 offenbart. Den aus diesen Druckschriften bekannten Lagergestellen ist gemeinsam, daß das neutronenabsorbierende Material fest in die tragende Struktur des Lagergestells eingebunden ist. Bei dem in der US-PS 4,088,897 offenbarten Lagergestell ist borhaltiges Material zwischen einer inneren und einer äußeren Wand eines Schachtes zur Aufnahme eines abgebrannten Brennelementes angeordnet. Bei dem aus der US-PS 4,630,738 bekannten Lagergestell sind auf einer Grundplatte eine Mehrzahl zueinander paralleler neutronenabsorbierender quadratischer Schächte mit der Grundplatte fest verbunden, wobei das neutronenabsorbierende Material in Form von Platten aus gesintertem borierten rende Material in Form von Platten aus gesintertem borierten Aluminium fest auf die jeweiligen Seiten des rechteckigen Schachtes befestigt sind. Die borierten Platten sind zwischen einem inneren und einem äußeren Schacht angeordnet. In der US-PS 4,695,424 ist ein Lagergestell offenbart, bei dem das neutronenabsorbierende Material, beispielsweise ein Borcarbid, in Form von Platten, an die Außenseite eines Schachtes zur Aufnahme von abgebrannten Brennelementen unverschieblich befestigt, insbesondere verschweißt ist. Die US-PS 4,119,859 beschreibt ein Lagergestell für Brennelemente einer Kernkraftanlage mit Schächten zur Aufnahme jeweils einen Brenn-elementes. Die Schächte haben hierbei eine Sandwich-Struktur mit einer Innenwand und einer Außenwand, zwischen denen ein neutronenabsorbierendes Material, beispielsweise Borcarbid, eingelagert ist.

Diese Maßnahmen zur Einbringung von neutronenabsorbierendem Material in ein Brennelement-Lagergestell bestehen darin, das neutronenabsorbierende Material fest in die tragende Struktur des Brennelement-Lagerbeckens einzubinden, was einen erheblichen konstruktiven Herstellungsaufwand erfordert sowie gegebenenfalls eine Überwachung des neutronenabsorbierenden Materials bedingt.

Aus der FR-A-2 440 060 ist ein Brennelement-Lagergestell bekannt, bei dem in einem Schacht ein neutronenabsorbierendes Element angeordnet ist, wobei Schacht und neutronenabsorbierendes Element unabhängig voneinander sind.

Aufgabe der Erfindung ist es, ein Brennelement-Lagergestell anzugeben, bei dem bei erleichterter Montage eine hohe Stabilität des gesamten Schacht-Verbandes gewährleistet und eine hohe Beladungsdichte sowie eine Entkopplung des neutronenabsorbierenden Materials von den tragenden Strukturen des Schacht-Verbandes gegeben ist.

Die Aufgabe wird durch ein Lagergestell für Kernreaktor-Brennelemente gelöst, welches die folgenden Merkmale aufweist:
a) auf einer Grundplatte sind mehrere Strukturschächte mit im wesentlichen rechteckigem Querschnitt befestigt;
b) die Strukturschächte stehen aufrecht auf der Grundplatte und sind schachbrettartig jeweils in etwa diagonal einander gegenüberliegend angeordnet, wobei diagonal gegenüberliegende Strukturschächte jeweils einen Zwischenraum aufspannen;
c) in dem Zwischenraum und/oder in einem Strukturschacht ist eine gegenüber den Strukturschächten verschiebbare neutronenabsorbierende Struktur mit boriertem Stahl angeordnet ist.
d) die neutronenabsorbierende Struktur weist zumindest in einem Teilbereich Abstandshalter, wie eine Leiste, ein Blech oder eine Randsicke, zu einem jeweilgen Strukturschacht hin auf.

Durch die beschriebene Trennung der lastabtragenden Funktion in den Strukturschächten von der Funktion der Neutronenabsorption können die zur Aufnahme der Brennelemente bestimmten Strukturschächte einfach aus bekanntem unborierten austenitischen Stahl oder anderen hierfür zugelassenen Stählen, insbesondere in einer Großfertigung, gefertigt werden. Die neutronenabsorbierende Struktur hat keinerlei tragende Funktion, so daß die Verwendung von boriertem Stahl sowohl aus herstellungstechnischer Sicht als auch aus mechanischen Stabilitätsgründen völlig unproblematisch ist. Durch entsprechende Formgebung der neutronenabsorbierenden Struktur kann der Zwischenraum ebenfalls zur Aufnahme von abgebrannten Brennelementen verwendet werden. Die Verwendung von boriertem Stahl hat zusätzlich den Vorteil, daß eine Überwachung der Neutronenabsorptionsfähigkeit nicht erforderlich ist. Der borierte Stahl hat beispielsweise einen Boranteil von bis zu 2 %. Eine Anordnung der Struktur in den Strukturschächten ist ebenfalls möglich, wobei besonders wirkungsvoll eine Anordnung sowohl in den Strukturschächten als auch in den Zwischenräumen ist, da hiermit zwei Lagen, beispielsweise aus Blechen, aus boriertem Stahl hintereinander gelegt werden, wodurch auch eine Lagerung von Brennelementen mit relativ hoher radioaktiver Strahlungsleistung möglich ist.

Da die neutronenabsorbierende Struktur gegenüber den Strukturschächten verschiebbar ausgestaltet ist, kann beispielsweise bei einer gegebenenfalls erforderlichen Anpassung der Form der Struktur an die aufzunehmenden Brennelemente ein Austausch der Struktur durchgeführt werden. Weiterhin ist somit gewährleistet, daß mechanische Kräfte allenfalls in geringem Maße auf die Struktur übertragen werden. Eine verschiebbare Struktur eignet sich zudem zur Nachrüstung bestehender Brennelement-Lagergestelle.

Zur Abstützung und Positionierung des Absorberschachtes grenzen zumindest ein Teil der Bleche in zumindest einem Teilbereich an einen jeweiligen Strukturschacht an. Die Bleche weisen hierzu die genannten Abstandshalter, wie Leisten oder Abstandsbleche, auf. Die Bleche können auch, insbesondere um die Nutzung der von den Strukturschächten gebildeten Ecken zu verbessern, nach außen gebogene, d.h. zu den Seitenwänden der Strukturschächte gebogene Randsicken aufweisen. Mit den Abstandshaltern wird die Entkopplung des neutronenabsorbierenden Materials von den tragenden Strukturen vorteilhaft begünstigt.

Vorzugsweise weist die Struktur Bleche aus boriertem Stahl auf, die insbesondere für eine besonders effektive Neutronenabsorption im wesentlichen parallel zu den Seitenwänden der Strukturschächte angeordnet sind. Die Bleche können hierzu zu einem im wesentlichen rechteckigen Absorberschacht verbunden sein, welcher als nicht tragendes Element lediglich eine hinreichende selbsttragende Stabilität aufweisen muß. Ein solcher Absorberschacht kann auch nach Herstellung eines Lagergestell-Verbandes aus den Strukturschächten in einen gebildeten Zwischenraum eingefügt werden. Bevorzugt wird ein Absorberschacht aus jeweils vier Blechen gebildet, die untereinander lösbar verbunden, insbesondere miteinander verzahnt sind. Hierdurch wird der aus den lösbar miteinander verbundenen Blechen gebildete Absorberschacht von den ihn umgebenden Strukturschächten in seiner Position gehalten, wodurch eine lose eingebaute und unbelastete vorzugsweise rechteckige Zelle gebildet wird. Diese durch den Absorberschacht gebildete Zelle eignet sich wiederum zur Aufnahme eines abgebrannten Brennelementes.

Vorzugsweise weist ein Strukturschacht, an dem der Grundplatte gegenüberliegenden Ende eine insbesondere parallel zur Grundplatte verlaufende, in den Zwischenraum weisende Führungsleiste auf, durch welche ein unbeabsichtigtes Herausnehmen der neutronenabsorbierende Struktur aus dem Zwischenraum, beispielsweise bei einer Entnahme eines darin angeordneten Brennelementes, vermieden wird.

Zur Erhöhung der mechanischen Stabilität des Brennelement-Lagergestells, welches aus den Strukturschächten aufgebaut ist, sind jeweils einander diagonal gegenüberliegende Strukturschächte an den entsprechenden Längskanten über wenigstens ein Verbindungselement verbunden, wobei das Verbindungselement eine hohe Steifigkeit aufweist und in einer ersten Richtung parallel zur Grundplatte verläuft. Durch die Verbindung, insbesondere eine Schweißverbindung, der Strukturschächte mit dem Verbindungselement wird ein mechanisch stabiler Verbund aus tragenden Strukturschächten zur Aufnahme von abgebrannten Brennelementen gebildet. An den Längskanten kann zu einer weiteren Erhöhung der mechanischen Stabilität ein weiteres Verbindungselement mit einer hohen Steifigkeit, welches entlang einer zweiten Richtung parallel zur Grundplatte verläuft, vorgesehen werden. Zwischen der ersten Richtung und der zweiten Richtung liegt ein Winkel, welcher vorzugsweise zwischen 70° und 90° beträgt. Die Verbindungselemente verlaufen demnach weitgehend senkrecht zueinander und kreuzen sich innerhalb des zwischen den Längskanten der diagonal aneinander gegenüberliegenden Strukturschächten vorhandenen Spaltes. Die Strukturschächte sind hierdurch innerhalb der von der Grundplatte aufgespannten Ebene fixiert und zwischen ihnen auftretende Kräfte werden von den Verbindungselementen aufgenommen.

Zur weiteren Erläuterung der Erfindung wird auf die Ausführungsbeispiele der Zeichnung verwiesen:
- FIG 1: zeigt ein Brennelement-Lagergestell, das in einer Seitenansicht veranschaulicht ist.
- FIG 2: zeigt einen Ausschnitt des Lagergestells im Bereich einer seiner Ecken in einem Schnitt parallel zur Ebene der Grundplatte.
- FIG 3: stellt einen Ausschnitt des Lagergestells, ebenfalls in einem Schnitt parallel zur Ebene der Grundplatte, dar.
- FIG 4: zeigt einen oberen Teil eines Lagergestells mit unterschiedlichen Verbindungselementen in einem Schnitt senkrecht zur Grundplatte und in
- FIG 5: ist eine Verbindung zweier Strukturschächte über sich kreuzende Verbindungselemente in einem Schnitt parallel zur Grundplatte dargestellt.

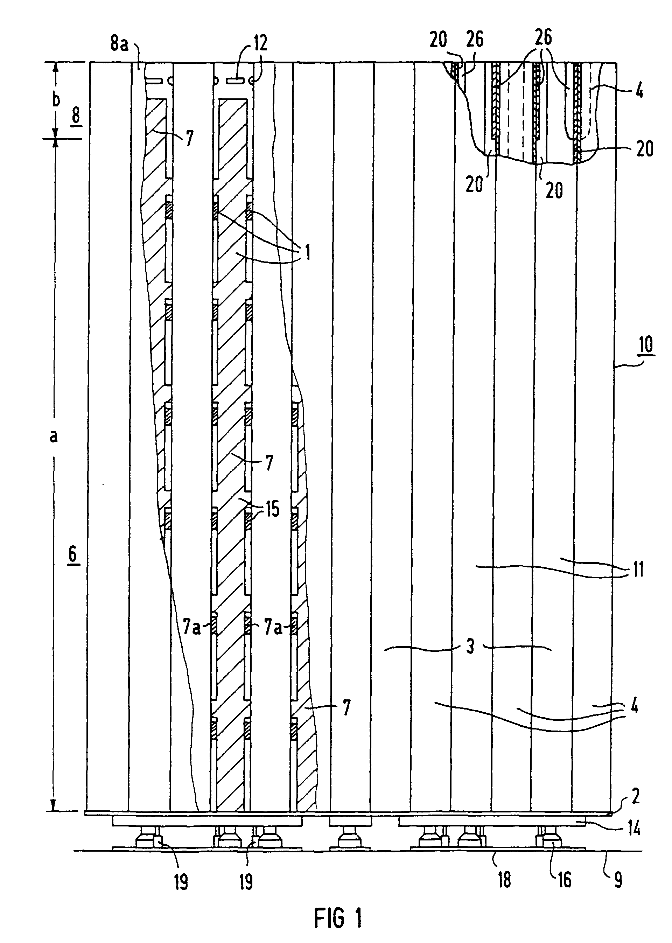

Gemäß FIG 1 sind in einem Lagergestell für Kernreaktor-Brennelemente mehrere Strukturschächte 4 aufrechtstehend auf einer Grundplatte 2 befestigt. Die Strukturschächte 4 sind auf der Grundplatte schachbrettartig angeordnet, so daß die in der Figur in Seitenansicht erkennbare Außenwand 10 des Lagergestells abwechselnd durch Seitenwände der Schächte und durch auf diese Seitenwände aufgeschweißte Randbleche 11 gebildet wird. Durch die schachbrettartige Anordnung der Strukturschächte 4 werden durch jeweils zwei diagonal aneinandergrenzende Strukturschächte Zwischenräume 3 aufgespannt, welche in etwa die gleiche Querschnittsfläche aufweisen wie die Strukturschächte 4.

An der Grundplatte 2 sind Verstärkungsplatten 14 angeordnet, die mit Füßen 16 versehen sind. Die Füße 16 ruhen über Fußplatten 18 auf den Boden 9 des in FIG 1 nicht näher dargestellten Brennelement-Lagerbeckens. Die Füße 16 sind in die Verstarkungsplatten 14 mit einem Grobgewinde eingeschraubt, dessen Gewindesteigung 6 mm beträgt. Zwischen der Verstarkungsplatte 14 und der Fußplatte 18 sind Spannbolzen 19 zum Verspannen der Füße 16 im Grobgewinde vorgesehen. Das Lagergestell ruht ohne seitliche Fixierung frei auf dem Boden 9 des Brennelement-Lagerbeckens.

Die Strukturschachte 4 sind untereinander mit ersten und zweiten Verbindungselementen 20 bzw. 26 verbunden. Im oberen rechten Bereich der Figur ist der Blick auf die hinter den Randblechen 11 liegenden Seitenwände der in der zweiten Reihe angeordneten Strukturschachte 4 freigelegt. Die ersten Verbindungselemente 20 und die zweiten Verbindungselemente 26 sind abwechselnd in einer Draufsicht auf ihre Flachseite bzw. in einem Schnitt ihrer Schmalseite zu erkennen, wobei im ersten Fall jeweils eine Hälfte durch einen davorliegenden Strukturschacht 4 verdeckt wird.

Die unteren ersten Verbindungselemente 20 erstrecken sich im Beispiel der FIG 1 über die gesamte Höhe a + b der Strukturschächte 4, d.h. über einen unteren Bereich 6 und über einen oberen Bereich 8. Um eine leichte Schweißbarkeit der zweiten Verbindungselemente 26 zu ermöglichen, erstrecken sich diese nur im oberen Bereich 8 auf einer Länge b, die weniger als 25 % der gesamten Höhe a + b der Strukturschachte 4 beträgt. Bei einer Gesamthöhe der Strukturschächte 4 von etwa 4,5 m sind insbesondere zwei Verbindungselemente 26 vorgesehen, deren Länge zwischen 300 mm und 500 mm beträgt.

Die Strukturschächte 4 bestehen aus austenitischen für die Verwendung in Kernkraftanlagen qualifizierten Stählen und sind als Schächte mit annähernd quadratischem Querschnitt ausgeführt. Die Verbindungselemente bestehen aus einem duktilen austenitischen Stahl mit niedrigem Kohlenstoffgehalt, insbesondere von weniger als 0,1 %.

Im linken Teil der FIG 1 ist über die gesamte Höhe a + b der Strukturschächte 4 ein Blick auf die hinter den Randflächen 11 liegenden Seitenwände der in der zweiten Reihe angeordneten Strukturschächte 4 und der dazwischen liegenden Räume 3 dargestellt. Im oberen Bereich 8 des Brennelement-Lagergestells befindet sich an dem der Grundplatte 2 gegenüberliegenden Ende 8a der Strukturschachte 4 eine parallel zur Ebene der Grundplatte verlaufende Führungsleiste 12 an der Außenseite des Strukturschachtes 4, d.h. der dem Zwischenraum 3 zugewandten Seite. Unterhalb dieser Führungsleiste 12 befindet sich in dem Zwischenraum 3 eine gegenüber den Strukturschächten 4 verschiebbare neutronenabsorbierende Struktur 1, welche aus Blechen 7 aus boriertem Stahl aufgebaut ist. Insgesamt sind in einem Zwischenraum 3 vier solcher Bleche 7, 7a angeordnet, die sich weitgehend über die gesamte Höhe a + b des Brennelement-Lagergestells erstrecken und jeweils parallel zu einer Seitenwand der den Zwischenraum 3 umgebenden Strukturschächte 4 verlaufen. Die Bleche 7, 7a weisen über die gesamte Höhe a + b eine Mehrzahl von Vorsprüngen auf, durch die jeweils senkrecht aufeinander stehende Bleche 7, 7a ineinander verzahnt sind. Hierdurch wird aus den Blechen 7, 7a ein selbsttragender Absorberschacht 15 gebildet, welcher innerhalb des Zwischenraumes 3 angeordnet ist.

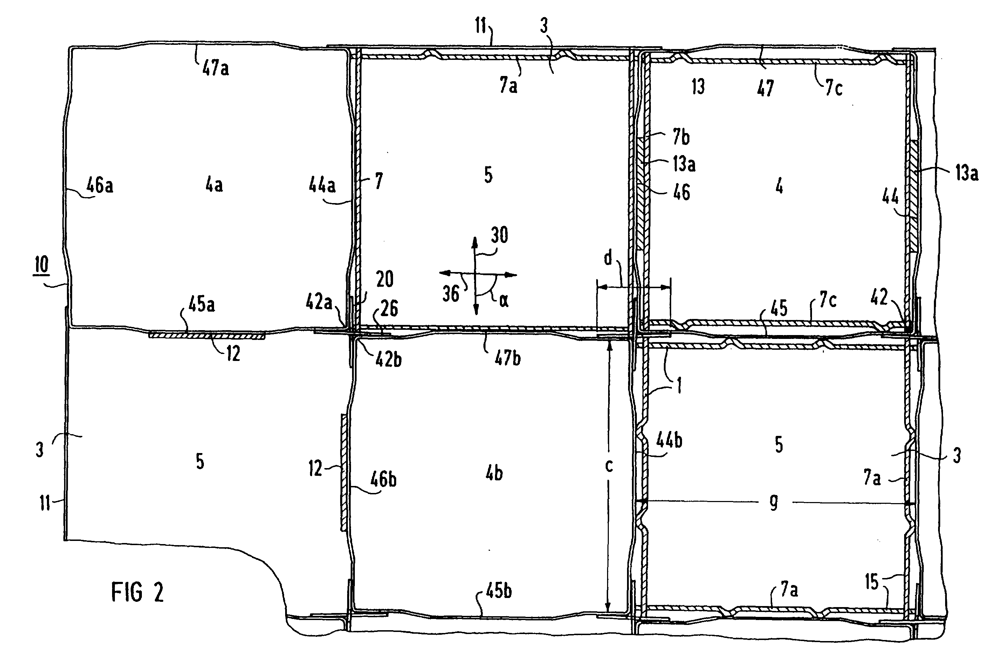

Entsprechend FIG 2 sind die Strukturschächte jeweils diagonal einander gegenüberliegend angeordnet, so daß sich ein schachbrettartiges Muster ergibt. In der Figur ist ein Randbereich des Lagergestells an einer Ecke dargestellt. Im Randbereich des Lagergestells umgeben drei Strukturschächte 4 einen Zwischenraum 3, der nach außen durch ein Randblech 11 verschlossen ist und zusätzlich zu den Strukturschächten 4 zur Aufnahme eines (nicht dargestellten) Brennelementes in einer Zwischenposition 5 dient. In den Zwischenraum 3 ist ein Absorberschacht 15, aufgebaut aus vier Blechen 7, 7a aus boriertem Stahl, eingesetzt. (Zur besseren Übersicht ist nur ein Absorberschacht dargestellt.) Die Bleche 7, 7a sind im wesentlichen eben und verlaufen jeweils parallel zu den Seitenwänden der den Zwischenraum umgebenden Strukturschächte 4, 4b. Aufgrund der nach außen gesickten Seitenwände 44 bis 47 liegen die Bleche 7, 7a an den Seitenwänden an, wodurch die Position des Absorberschachtes 15 innerhalb des Zwischenraumes 3 fixiert ist. An den Kanten 42a, 42b der Strukturschächte 4 ist zudem hinreichend Platz für ein Ineinandergreifen, eine Verzahnung, der ebenen Bleche 7, 7a gegeben. In FIG 2 ist auch dargestellt, wie ein Absorberschacht 15 mit gesickten Blechen 7b bzw. ebenen Blechen 7c mit Abstandshaltern 13a in einem Strukturschacht 4 angeordnet ist. Durch ein zumindest punktuelles Anliegen der weitgehend ebenen Bleche 7, 7a ist der Innenbereich des Zwischenraumes 3 frei für die Aufnahme eines abgebrannten nicht dargestellten Brennelementes. Wie zu FIG 1 bereits erläutert, weisen die Strukturschächte 4 an ihrem oberen Ende 8a parallel zu den Seitenwänden 44 bis 47 verlaufende Führungsleisten 12 - von denen nur zwei dargestellt sind - auf, die in den Zwischenraum 3 hineinweisen.

Die Seitenwände 44 bis 47, 44a bis 47a, 44 b bis 47b, der Strukturschächte 4, 4a, 4b sind jeweils nach außen gesickt, so daß die lichte Weite c der Strukturschächte mit der lichten Weite g der Zwischenräume 3 annähernd übereinstimmt. Die Weiten entsprechen jeweils den zu lagernden Brennelementen und können zwischen 140 mm und 380 mm betragen.

Die Strukturschächte und Seitenwände sind generell mit 4 bzw. 44 bis 47 und speziell mit 4a, 4b bzw. 44a bis 47a, 44b bis 47b bezeichnet. Die Strukturschächte 4 sind mit den ihn gegenüberliegenden Strukturschächten 4 über erste und zweite Verbindungselemente 20 und 26 verbunden. Jeweils zwei eine gemeinsame Längskante 2a bildenden Seitenwänden 44a und 45a eines Schachtes 4a sind zwei eine gemeinsame Längskante 2b bildende Seitenwände 47b und 46b des diagonal gegenüberliegenden Schachtes 4b zugeordnet. Das erste Verbindungselement 20 hat die Gestalt eines Blechstreifens und verbindet die Seitenwand 44a des Schachtes 4a mit der zu ihr annähernd parallelen Seitenwand 46b des Schachtes 4b. Das zweite ebenfalls streifenförmige Verbindungselement 26 verbindet die Seitenwand 45a des Schachtes 4a mit der Seitenwand 47b des Schachtes 4b.

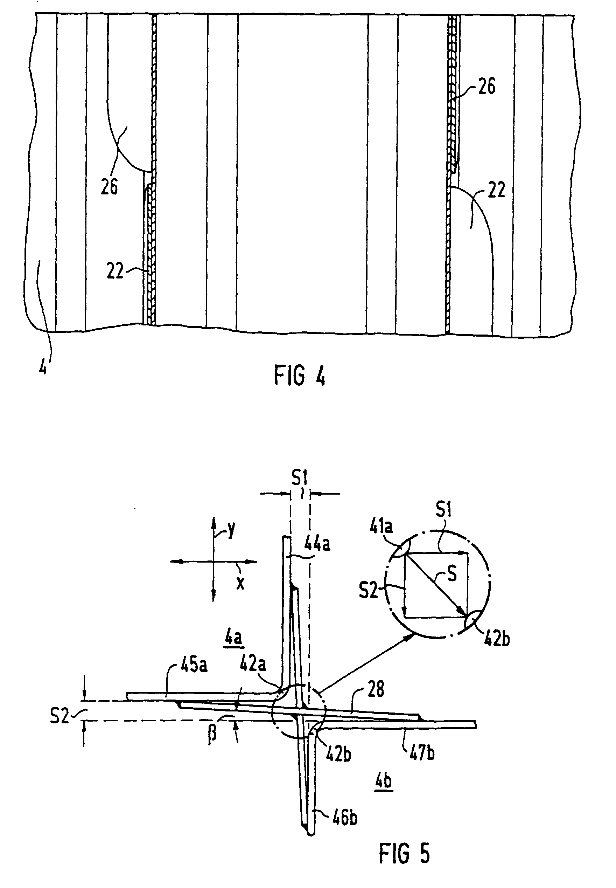

Das erste Verbindungselement 20 hat eine hohe Steifigkeit in den durch den Doppelpfeil 30 angedeuteten, parallel zur Flachseite des ersten Verbindungselements 20 verlaufenden Richtungen. Das zweite Verbindungselement 26 hat eine hohe Steifigkeit in eine annähernd senkrecht zur Richtung 30 verlaufenden Richtung 36. Der etwa rechte Winkel α zwischen diese beiden Richtungen 30 und 36 beträgt vorzugsweise zwischen 70° und 90°. In der Figur ist zu erkennen, daß die ersten und zweiten streifenförmigen Verbindungselemente 20 bzw. 26 nicht exakt parallel oder senkrecht zur Außenwand 10 und den Seitenwänden 44a, 45a, 46b und 47b verlaufen, sondern jeweils unter einem spitzen Winkel β (FIG 5) auf den Seitenflächen 44a, 45a, 46b und 47b aufliegen. Dadurch wird der im Bereich der Längskanten 42a und 42b erforderliche Versatz S1 in Richtung x und S2 in Richtung y zwischen den Strukturschächten 4a und 4b ausgeglichen. Die Richtung des Versatzes S1 ist parallel zur Achse x und des Versatzes S2 parallel zur Achse y eines rechtwinkligen Achsenkreuzes x-y, das mit seinen beiden Achsen parallel zu den Wänden 44,46 und 45,47 der Strukturschächte 4 ausgerichtet ist. Durch die nach außen gesickten Seitenflächen 44a, b bis 47 a, b der Strukturschächte 4a und 4b wird dieser Versatz S1, S2 wieder aufgehoben, so daß die lichte Weite c der Strukturschächte mit der lichten Weite g des Zwischenraums 5a oder der Zwischenposition 5 nahezu übereinstimmt.

Durch die nach außen gesickten Seitenflächen 44 bis 47 der Strukturschächte 4 sind diese Seitenwände 44 bis 47 im Bereich ihrer Längskanten 42 vom Mittelpunkt des von ihnen umgebenen Zwischenraums 3 aus betrachtet zurückversetzt, so daß die Gefahr, daß die dort angeschweißten Verbindungselemente sich beim Be- und Entladen der Strukturschächte 4 oder der Zwischenplatze 5 mit einem Brennelement verhaken können, praktisch ausgeschlossen ist. In FIG 5 ist der Versatz S1, S2 in einem Ortsvektor-Diagramm vergrößert herausgezeichnet, wobei sich der resultierende Ortsvektor S = Abstand oder Spalt zwischen den beiden Längskanten 42a, 42b ergibt.

Die Breite d der streifenförmigen ersten und zweiten Verbindungselemente 20 bzw. 26 beträgt etwa 10 bis 30 % der lichten Weite c eines Strukturschachtes 4, im Beispiel 60 mm. Die Wandstärke der Verbindungselemente 20, 26 beträgt vorzugsweise 50 % bis 90 % der Wanddicke der Strukturschächte 4. Im Ausführungsbeispiel der Figur ist bei einer Wanddicke der Strukturschächte 4 von 2 mm eine Wandstärke der Verbindungselemente 20, 26 von etwa 1,5 mm vorgesehen.

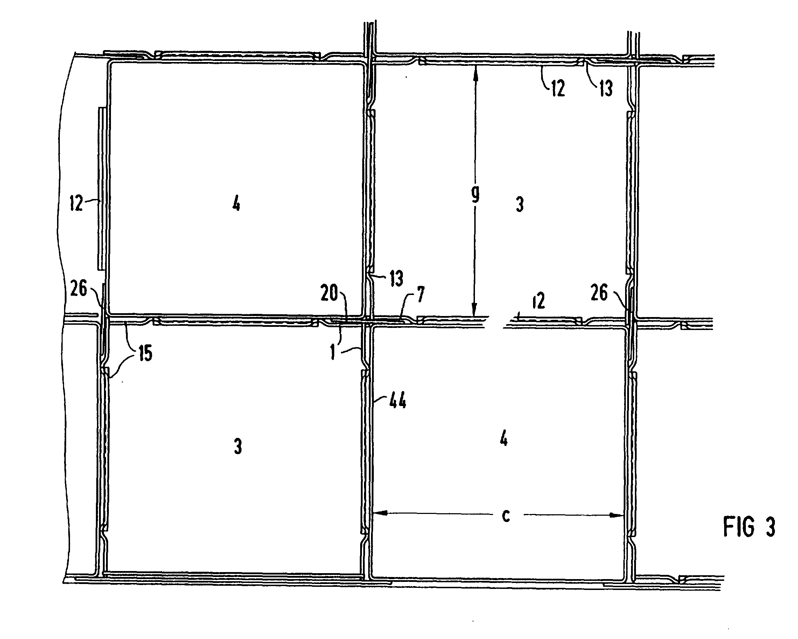

In FIG 3 ist analog zu FIG 2 ein Querschnitt durch ein Lagergestell dargestellt, wobei gleiche Teile mit gleichen Bezugszeichen bezeichnet sind. Die Strukturschächte 4 sind aus ebenen Blechen gebildet, welche an den Kanten jeweils mit einer Rundung ineinander übergehen. Die Strukturschächte 4 sind besonders einfach herzustellen. Diagonal gegenüberliegende Strukturschächte 4 sind jeweils mit einem Verbindungselement 20 miteinander mechanisch stabil verbunden, wobei benachbarte Verbindungselemente 20 in zwei unterschiedliche Richtungen gestreckt sind, welche Richtungen einen Winkel von 70° bis 90° einschließen. In den Zwischenräumen 3 ist jeweils ein Absorberschacht 15 aus ineinander lösbar verzahnten Blechen 7 angeordnet. Die Bleche 7 verlaufen weitgehend parallel zu den Seitenwänden 44 bis 47 der Strukturschächte und weisen Randsicken 13 auf, über welche sie an der jeweiligen Seitenwand 44 bis 47 anliegen. Die Bleche 7 können auch eben verlaufen und über entsprechende Abstandshalter 13a von den Seitenwänden 44 der Strukturschächte beabstandet sein, so daß im Bereich der Längskanten 42a (siehe FIG 2) ein Ineinandergreifen der Bleche 7, eine Verzahnung, erreicht ist. Hierdurch ist die Lage des Absorberschachtes 15 in dem Zwischenraum 3 fixiert, und der Absorberschacht 15 bietet hinreichend viel Platz zur Aufnahme eines abgebrannten Brennelements.

Entsprechend FIG 4 sind erste Verbindungselemente 22 vorgesehen, die sich nur im unteren Bereich 6 der Strukturschachte 4 erstrecken und nicht bis an deren Oberkante heranragen. Diese ersten Verbindungselemente 22 sind ebenfalls an ihrem freien, in das Schachtinnere hineinragenden Ende spitz oder verjüngt zulaufend geformt, um zu verhindern, daß sie sich mit den Brennelementen beim Beladen mit den ersten Verbindungselementen 22 verhaken. Die zweiten Verbindungselemente 26 sind an ihrem von der Stirnseite der Strukturschächte 4 abgewandten Ende verjüngt oder spitz zulaufend geformt, um ebenfalls ein Verhaken mit den Brennelementen beim Entladen zu vermeiden.

FIG 5 dient nicht nur zur Erläuterung des Versatzes S1, S2, sondern zeigt eine vorteilhafte Ausgestaltung mit kreuzförmigen zweiten Verbindungselementen 28, die mit den einander zugewandten Seitenflächen 44a, 45a und 46b, 47b der Strukturschächte 4a bzw. 4b verschweißt sind. In der Figur ist zu erkennen, daß auch in diesem Ausführungsbeispiel die jeweiligen Flachseiten des kreuzförmigen zweiten Verbindungselements 28 unter einem spitzen Winkel β zu den Seitenflächen 44a, 45a, 46b und 47b der Strukturschächte 4a bzw. 4b verlaufen.

Da die zweiten Verbindungselemente 28 nur im oberen Bereich des Lagergestells angeordnet sind, kann ihre Montage nachträglich von oben erfolgen. Die kreuzförmigen Verbindungselemente 28 können als separate Stücke mit Länge b (vgl. FIG 1) von oben her zwischen den Strukturschächten 4 eingeschweißt werden. Sie können aber auch dadurch entstehen, daß die über die Höhe a + b durchlaufenden, oben gemäß FIG 5 geschlitzten ersten Verbindungselemente 20 mit den dort angeordneten zweiten Verbindungselementen 26 verschweißt werden, oder daß auf angeschlitzte erste Verbindungselemente mit Länge a + b kurze zweite Verbindungselemente in zwei längsgeteilten Hälften aufgeschweißt werden.

Die Erfindung zeichnet sich durch ein Brennelement-Lagergestell für abgebrannte Brennelemente einer Kernkraftanlage aus, welches senkrecht auf einer Grundplatte stehende Strukturschächte aufweist, die schachbrettartig angeordnet sind. In den zwischen den schachbrettartig angeordneten Strukturschächten gebildeten Zwischenräume ist eine neutronenabsorbierende Struktur vorgesehen, welche vorzugsweise ein Absorberschacht ist. Alternativ kann der Absorberschacht auch unmittelbar in einen Strukturschacht eingefügt sein. Die Anordnung eines jeweiligen Absorberschachts in dem Zwischenraum sowie in den Strukturschachten ermöglicht auch die Lagerung von Brennelementen mit relativ hoher radioaktiver Strahlungsleistung, da zwei Absorberschichten (Bleche) hintereinander angeordnet sind. Dieser Absorberschacht ist aus vier ineinander verzahnten Blechen aufgebaut und innerhalb des Zwischenraums gegenüber den Strukturschächten verschiebbar, wodurch gewährleistet ist, daß eine tragende Funktion dem Absorberschacht nicht zukommt. Somit kann der Absorberschacht völlig unproblematisch aus einem borierten Stahl hergestellt werden. Ein so hergestelltes Lagergestell weist eine Trennung von lasttragenden Komponenten - den Strukturschächten - von den neutronenabsorbierenden Komponenten - den Absorberschächten - auf, wodurch auch eine Trennung bei der Herstellung der unterschiedlichen Komponenten erreicht wird und diese Herstellung dadurch besonders einfach durchgeführt werden kann. Insbesondere können die Strukturschächte in großtechnischem Maßstabe aus bekannten Stählen hergestellt werden. Die Zwischenräume zwischen den Strukturschächten sind vorzugsweise so dimensioniert, daß selbst nach Einfügen eines Absorberschachtes hinreichend Platz in dem Zwischenraum zur Aufnahme eines abgebrannten Brennelementes gegeben ist, so daß ein Kompaktlager für eine platzsparende Lagerung von Brennelementen bereitgestellt ist.

## Patentansprüche

1. Lagergestell für Kernreaktor-Brennelemente mit folgenden Merkmalen:
a) Auf einer Grundplatte (2) sind mehrere Strukturschächte (4) mit im wesentlichen rechteckigem Querschnitt befestigt;
b) die Strukturschächte (4) stehen aufrecht auf der Grundplatte (2) und sind schachbrettartig jeweils in etwa diagonal einander gegenüberliegend angeordnet, wobei diagonal gegenüberliegende Strukturschächte (4) jeweils einen Zwischenraum (3) aufspannen,
c) in dem Zwischenraum (3) und/oder in einem Strukturschacht (4) ist eine gegenüber den Strukturschächten (4) verschiebbare neutronenabsorbierende Struktur (1) mit boriertem Stahl angeordnet,
d) die neutronenabsorbierende Struktur (1) weist zumindest in einem Teilbereich Abstandshalter (13a), wie eine Leiste, ein Blech oder eine Randsicke, zu einem jeweilgen Strukturschacht (4) hin auf.

2. Lagergestell nach Anspruch 1,
**dadurch gekennzeichnet,** daß die Struktur (1) Bleche (7) aus boriertem Stahl aufweist.

3. Lagergestell nach Anspruch 2,
**dadurch gekennzeichnet,** daß die Bleche (7) einen im wesentlichen rechteckigen Absorberschacht (15) bilden.

4. Lagergestell nach Anspruch 3,
**dadurch gekennzeichnet,** daß jeweils vier Bleche (7) den Absorberschacht (15) bilden und die aneinandergrenzenden Bleche (7, 7a) lösbar miteinander verbunden, insbesondere verzahnt, sind.

5. Lagergestell nach einem der Ansprüche 2 bis 4,
**dadurch gekennzeichnet,** daß zumindest ein Teil der Bleche (7) zumindest in einem Teilbereich an einem jeweiligen Strukturschacht (4) angrenzt.

6. Lagergestell nach einem der vorhergehenden Ansprüche,
**dadurch gekennzeichnet,** daß an dem der Grundplatte (2) gegenüberliegenden Ende (8a) eines Strukturschachtes (4) eine Führungsleiste (12) angeordnet ist.

7. Lagergestell nach einem der vorhergehenden Ansprüche,
**dadurch gekennzeichnet,** daß jeder Strukturschacht (4) Seitenwände (44, 45, 46, 47) aufweist, die in entsprechenden Längskanten (42a, 42b) aneinanderstoßen, und wenigstens ein Teil der diagonal einander gegenüberliegenden Strukturschächte (4) jeweils entlang deren mit Versatz (S1, S2) aneinandergrenzenden Längskanten (42a, 42b) durch wenigstens ein Verbindungselement (20, 26), welches einen durch den Versatz (S1, S2) gebildeten Spalt (S) überbrückt, miteinander verbunden sind, wobei das Verbindungselement (20) mit einer hohen Steifigkeit in einer ersten Richtung (30 bzw. 36) parallel zur Grundplatte (2) vorgesehen ist.

8. Lagergestell nach Anspruch 7,
**dadurch gekennzeichnet,** daß wenigstens ein zweites Verbindungselement (26) mit einer hohen Steifigkeit jeweils in einer zweiten Richtung (36 bzw. 30) parallel zur Grundplatte (2) vorgesehen ist, wobei zwischen der ersten Richtung (30) und der zweiten Richtung (36) ein Winkel (a) zwischen 70° und 90° vorgesehen ist.

## Claims

1. Storage rack for nuclear reactor fuel elements, having the following features:
a) fastened to a baseplate (2) are a plurality of structural shafts (4) having a substantially rectangular cross-section;
b) the structural shafts (4) stand upright on the baseplate (2) and are arranged in a chequer-board-like manner, in each case substantially diagonally opposite each other, with diagonally opposed structural shafts (4) fixing an interstice (3) in each case;
c) arranged in the interstice (3) and/or in a structural shaft (4) is a neutron-absorbing structure (1) with boron-treated steel, which structure can be displaced with respect to the structural shafts (4);
d) at least in a partial region, the neutron-absorbing structure (1) has spacers (13a), such as a strip, a plate or an edge bead, towards a respective structural shaft (4).

2. Storage rack according to claim 1, characterised in that the structure (1) has plates (7) made of boron-treated steel.

3. Storage rack according to claim 2, characterised in that the plates (7) form a substantially rectangular absorber shaft (15).

4. Storage rack according to claim 3, characterised in that the absorber shaft (15) is formed by four plates (7) in each case, and the adjacent plates (7, 7a) are detachably connected to each other, in particular intermeshed.

5. Storage rack according to one of the claims 2 to 4, characterised in that at least a portion of the plates (7) adjoins a respective structural shaft (4) at least in a partial region.

6. Storage rack according to one of the preceding claims, characterised in that arranged at the end (8a) of a structural shaft (4) that is opposite the baseplate (2) is a guide strip (12).

7. Storage rack according to one of the preceding claims, characterised in that each structural shaft (4) has side walls (44, 45, 46, 47) which abut at corresponding longitudinal edges (42a, 42b), and at least some of the diagonally opposed structural shafts (4) are connected to each other, in each case along their longitudinal edges (42a, 42b) which are adjacent to each other with an offset (S1, S2), by at least one connecting element (20, 26) which bridges a gap (S) formed by the offset (S1, S2), with the connecting element (20) being provided with a high rigidity in a first direction (30 or 36) parallel to the baseplate (2).

8. Storage rack according to claim 7, characterised in that at least a second connecting element (26) is provided with a high rigidity in each case in a second direction (36 or 30 respectively) parallel to the baseplate (2), with an angle (a) of between 70° and 90° being provided between the first direction (30) and the second direction (36).

## Revendications

1. Râtelier de stockage d'assemblages combustibles de réacteur nucléaire, ayant les caractéristiques suivantes :
a) il est fixé sur une plaque (2) de base plusieurs puits (4) de structure de section transversale sensiblement rectangulaire ;
b) les puits (4) de structure se dressent verticalement sur la plaque (2) de base et sont disposés à la manière d'un échiquier en étant respectivement opposés à peu près en diagonale, des puits (4) de structure opposés en diagonale délimitant respectivement une chambre (3) intermédiaire ;
c) il est prévu dans la chambre (3) intermédiaire et/ou dans un puits (4) de structure une structure (1) en acier au bore, qui absorbe les neutrons et qui peut coulisser par rapport aux puits (4) de structure ;
d) la structure (1) absorbant les neutrons comporte au moins dans une partie, des entretoises (13a), comme une réglette, une tôle ou une nervure de bord, allant jusqu'à un puits (4) de structure.

2. Râtelier de stockage suivant la revendication 1,
caractérisé en ce que la structure (1) comporte des tôles (7) en acier au bore.

3. Râtelier de stockage suivant la revendication 2,
caractérisé en ce que les tôles (7) forment un puits (15) d'absorbant sensiblement rectangulaire.

4. Râtelier de stockage suivant la revendication 3,
caractérisé en ce que quatre tôles (7) forment le puits (15) d'absorbant et les tôles (7, 7a) adjacentes sont reliées les unes aux autres de manière amovible, en étant notamment jointes à adent.

5. Râtelier de stockage suivant l'une des revendications 2 à 4,
caractérisé en ce qu'au moins une partie des tôles (7) est adjacente au moins dans une partie d'un puits (4) de structure.

6. Râtelier de stockage suivant l'une des revendications précédentes,
caractérisé en ce qu'à l'extrémité (8a) d'un puits (4) de structure, qui est opposée à la plaque (2) de base, est prévue une réglette (12) de guidage.

7. Râtelier de stockage suivant l'une des revendications précédentes,
caractérisé en ce que chaque puits (4) de structure comporte des parois (44, 45, 46, 47) latérales qui s'aboutent en des bords (42a, 42b) longitudinaux correspondants et au moins une partie des puits (4) de structure opposés en diagonale sont reliés entre eux respectivement le long de leurs bords (42a, 42b) longitudinaux adjacents en ayant un décalage (S1, S2) par au moins un élément (20, 26) de liaison, qui recouvre un intervalle (S) formé par les décalages (S1, S2), l'élément (20) de liaison ayant une grande rigidité dans une première direction (30 ou 36) parallèle à la plaque (2) de base.

8. Râtelier de stockage suivant la revendication 7,
caractérisé en ce qu'il est prévu au moins un second élément (26) de liaison ayant une grande rigidité dans une seconde direction (36 ou 30) parallèle à la plaque (2) de base, avec un angle (a) entre la première direction (30) et la seconde direction (36) compris entre 70 et 90°.
